Europäisches Patentamt

European Patent Office

Office européen des brevets

(19)

(11) Veröffentlichungsnummer : **0 108 324**
**B1**

(12) **EUROPÄISCHE PATENTSCHRIFT**

(45) Veröffentlichungstag der Patentschrift :
21.01.87

(21) Anmeldenummer : 83110598.6

(22) Anmeldetag : 24.10.83

(51) Int. Cl.⁴ : **C 08 G  2/08**, C 08 G  2/30

(54) Verfahren zur Herstellung von Polyoximethylenen aus Formaldehyd.

(30) Priorität : 06.11.82 DE 3241115

(43) Veröffentlichungstag der Anmeldung :
16.05.84 Patentblatt 84/20

(45) Bekanntmachung des Hinweises auf die Patenterteilung : 21.01.87 Patentblatt 87/04

(84) Benannte Vertragsstaaten :
BE DE FR GB IT NL

(56) Entgegenhaltungen :
EP-A- 0 080 656
EP-A- 0 083 698
DE-A- 3 207 773
DE-B- 1 176 858
DE-B- 1 495 476

(73) Patentinhaber : BASF Aktiengesellschaft
Carl-Bosch-Strasse 38
D-6700 Ludwigshafen (DE)

(72) Erfinder : Sadlowski, Juergen, Dr.
Edenkobener Strasse 3
D-6700 Ludwigshafen (DE)
Erfinder : Walter, Manfred, Dr.
Hans-Purrmann-Allee 18
D-6720 Speyer (DE)
Erfinder : Hilt, Albrecht, Dr.
Moselstrasse 5
D-6703 Limburgerhof (DE)

**Beschreibung** (für die Vertragsstaaten : DE, FR, GB, IT, NL)

Die Erfindung betrifft ein kontinuierliches Verfahren zur Herstellung von Oxymethylenpolymeren durch Homo- oder Copolymerisation von Formaldehyd mit 9,1 bis 71 %, bezogen auf die Gesamtmenge an rückgeführten Restmonomeren und Formaldehyd, rückgeführten Restmonomeren mit Hilfe üblicher Initiatoren und gegebenenfalls in Gegenwart von Reglern.

Es ist bekannt, daß Oximethylenhomo- und -copolymere durch Lösungs-Fällungs-Polymerisation in Gegenwart anionisch, kationisch oder komplex wirkender Katalysatoren aus Formaldehyd hergestellt werden können. So wird in der US-PS-2 768 994 die Polymerisation von Formaldehyd in organischen Lösungsmitteln beschrieben. Die Polymerisationstemperatur beträgt — 110 bis + 70 °C, so daß das im Lösungsmittel schwerlösliche Polymer als Pulver anfällt. In der US-PS-3 347 829 wird die Copolymerisation von flüssigem Formaldehyd bei Temperaturen von — 80 bis — 70 °C beschrieben. Auch hier fällt das Polymer in fester Form an. Bei derartigen Verfahrensweisen ist die Gewinnung des festen Polymeren aus dem Reaktionsgemisch mit einem erheblichen Aufwand verbunden.

Der Erfindung lag die Aufgabe zugrunde, ein kontinuierliches Verfahren zur Polymerisation von Formaldehyd zu entwickeln, das einfach zu beherrschen und zu steuern ist, das ferner mit einem geringen Energieaufwand in einfachen Apparaturen durchführbar ist und das schließlich homogene Polymerisate mit gleichbleibender Produktqualität liefert.

In der älteren Anmeldung EP-A-0 080 656 wird ein Verfahren zur Herstellung von Polyoxymethylenen aus Trioxan beschrieben, bei welchem die Polymerisationsmischung in fluider Form vorliegt, wobei das Trioxan unter den Reaktionsbedingungen in bis zu 5 % im Gleichgewicht mit Formaldehyd steht. Dieses Dokument ist Stand der Technik nach Artikel 54(3) EPÜ.

Diese Aufgabe wird erfindungsgemäß mit einem Verfahren gemäß Oberbegriff des Anspruchs 1 gelöst, das dadurch gekennzeichnet ist, daß Polymerisation in fluider Phase erfolgt, d. h. alle an der Reaktion beteiligten Komponenten in geschmolzener, gasförmiger oder gelöster Form vorliegen.

Das erfindungsgemäße Verfahren wird für die Homo- und Copolymerisation von Formaldehyd angewandt.

Als Comonomere können alle bei der Copolymerisation von Formaldehyd oder Trioxan üblicherweise eingesetzten, copolymerisierbaren Verbindungen verwandt werden, wobei ihr Mengenanteil im allgemeinen 0,1 bis 15 und insbesondere 0,5 bis 5 Gew. % der Gesamtmonomerenmenge beträgt. Als geeignete Comonomere seien genannt : cyclische Ether und cyclische Acetale mit mindestens 2 benachbarten Kohlenstoffatomen und insbesondere 3 bis 9 Ringgliedern, z. B. Ethylenoxid, Propylenoxid, Trimethylenoxid, Butadienoxid, 1,3-Dioxolan, 1,4-Butandiolformal, Thiodiglykolformal oder 1,3-Oxthiolan sowie Gemisch der genannten Verbindungen. Geeignete Comonomere sind ferner copolymerisierbare, olefinisch ungesättigte Verbindungen, wie Styrol, Isobutylen oder -COC-Gruppierungen in der Kette, insbesondere lineare Polyacetale, z. B. Polydioxolan. Die Molekulargewichte des Polymeren können gegebenenfalls durch die bei der Formaldehyd- oder Trioxanpolymerisation üblichen Regler auf die angestrebten Werte eingestellt werden. Als Regler kommen Acetale bzw. Formale einwertiger Alkohole, die Alkohole selbst sowie die als Kettenüberträger fungierenden geringen Mengen Wasser, deren Anwesenheit sich in der Regel nie vollständig vermeiden läßt, in Frage. Die Regler werden in Mengen von 10 bis 10 000 ppm, vorzugsweise von 100 bis 1 000 ppm, eingesetzt.

Als Initiatoren werden die bei der Formaldehyd- oder Trioxanpolymerisation üblichen Starter oder ionisierende Strahlen verwendet. Es eignen sich Protonensäuren, wie fluorierte oder chlorierte Alkyl- und Arysulfonsäuren, z. B. Trifluormethansulfonsäure oder Lewis-Säuren, wie z. B. Zinntetrachlorid, Arsenpentafluorid, Phosphorsäurepentafluorid und Bortrifluorid sowie deren Komplexverbindungen und salzartige Verbindungen, z. B. Bortrifluorid-Etherate und Triphenylmethylenhexafluorophosphat. Es versteht sich von selbst, daß nur solche Initiatoren verwendbar sind, die unter den Polymerisationsbedingungen ausreichend stabil sind. Die Katalysatoren werden in Mengen von etwa 0,01 bis 1 000 ppm, vorzugsweise 0,05 bis 10 ppm, eingesetzt. Im allgemeinen empfiehlt es sich, den Katalysator in verdünnter Form zuzusetzen, vorzugsweise in Konzentrationen von 0,005 bis 5 Gew. %. Als Lösungsmittel hierfür können inerte Verbindungen, wie aliphatische, cycloaphatische Kohlenwasserstoffe, halogenierte aliphatische Kohlenwasserstoffe, Glykolether usw. verwendet werden.

Monomere, Initiatoren und gegebenenfalls Regler können auf beliebige Weise vorgemischt oder auch getrennt voneinander dem Polymerisationsreaktor zugegeben werden. Zweckmäßigerweise wird Formaldehyd mit einer Reinheit von über 99,9 % dem Reaktor in verdichteter Form unter einem Druck von 5 bis 50 bar (0,506-5,06 MPa) bevorzugt 5 bis 25 bar (0,506-2,53 MPa), und mit einer Temperatur von 20 bis 180 °C zusammen mit aus dem Prozeß zurückgeführtem Restmonomeren, im wesentlichen Trioxan, von 75 bis 140 °C zugeführt. Die Verdichtung des Formaldehyds kann in Kolbenverdichtern, Turboverdichtern und Flüssigkeitsverdichtern, die mit Rückführtrioxan betrieben werden, erfolgen. Das Masseverhältnis des rückgeführten Restmonomeren, im wesentlichen Trioxan, zu eingesetztem Formaldehyd beträgt 0,1 : 1 bis 2,5 : 1 und besonders bevorzugt 0,3 : 1 bis 1 : 1. Dies entspricht einem Restmonomeren-Anteil von 9,1-71, besonders bevorzugt von 23-50 %, jeweils bezogen auf die Gesamtmenge an rückgeführten Restmonomeren und Formaldehyd.

**Beschreibung** (für die Vertragsstaaten : BE, DE, FR, GB, IT, NL)

Der Polymerisationsreaktor kann als Extruder, Kneter, Rührkessel oder als Strömungsrohr mit oder ohne statische Mischerelemente ausgebildet sein. Der Polymerisationsreaktor ist temperierbar, wobei ihm auch ein Temperaturprofil aufgeprägt werden kann. Ferner können entlang des Reaktors Comonomerdosierstellen vorgesehen sein. Auch Zusätze zur Modifizierung der Schlagzähigkeit können gezielt zudosiert werden.

Erfindungsgemäß sind Temperatur und Druck in der Polymerisationszone so zu wählen, daß die Reaktionskomponenten in fluider Form vorliegen.

**Beschreibung** (für den Vertragsstaat BE)

Die Erfindung betrifft ein kontinuierliches Verfahren zur Herstellung von Oxymethylenpolymeren durch Homo- oder Copolymerisation von Formaldehyd mit Hilfe üblicher Initiatoren und gegebenenfalls in Gegenwart von Reglern.

Es ist bekannt, daß Oximethylenhomo- und -copolymere durch Lösungs-Fällungs-Polymerisation in Gegenwart anionisch, kationisch oder komplex wirkender Katalysatoren aus Formaldehyd hergestellt werden können. So wird in der US-PS 2 768 994 die Polymerisation von Formaldehyd in organischen Lösungsmitteln beschrieben. Die Polymerisationstemperatur beträgt — 110 bis + 70 °C, so daß das im Lösungsmittel schwerlösliche Polymer als Pulver anfällt. In der US-PS 3 347 829 wird die Copolymerisation von flüssigem Formaldehyd bei Temperaturen von — 80 bis — 70 °C beschrieben. Auch hier fällt des Polymer in fester Form an. Bei derartigen Verfahrensweisen ist die Gewinnung des festen Polymeren aus dem Reaktionsgemisch mit einem erheblichen Aufwand verbunden.

Der Erfindung lag die Aufgabe zugrunde, ein kontinuierliches Verfahren zur Polymerisation von Formaldehyd zu entwickeln, das einfach zu beherrschen und zu steuern ist, das ferner mit einem geringen Energieaufwand in einfachen Apparaturen durchführbar ist und das schließlich homogene Polymerisate mit gleichbleibender Produktqualität liefert.

Diese Aufgabe wird erfindungsgemäß mit einem Verfahren gemäß Oberbegriff des Anspruchs 1 gelöst, das dadurch gekennzeichnet ist, daß Polymerisation in fluider Phase erfolgt, d. h. alle an der Reaktion beteiligten Komponenten in geschmolzener, gasförmiger oder gelöster Form vorliegen.

Das erfindungsgemäße Verfahren wird für die Homo- und Copolymerisation von Formaldehyd angewandt.

Als Comonomere können alle bei der Copolymerisation von Formaldehyd oder Trioxan üblicherweise eingesetzten, copolymerisierbaren Verbindungen verwandt werden, wobei ihr Mengenanteil im allgemeinen 0,1 bis 15 und insbesondere 0,5 bis 5 Gew. % der Gesamtmonomerenmenge beträgt. Als geeignete Comonomere seien genannt : cyclische Ether und cyclische Acetale mit mindestens 2 benachbarten Kohlenstoffatomen und insbesondere 3 bis 9 Ringgliedern, z. B. Ethylenoxid, Propylenoxid, Trimethylenoxid, Butadienoxid, 1,3-Dioxolan, 1,4-Butandiolformal, Thiodiglykolformal oder 1,3-Oxthiolan sowie Gemische der genannten Verbindungen. Geeignete Comonomere sind ferner copolymerisierbare, olefinisch ungesättigte Verbindungen, wie Styrol, Isobutylen oder -COC-Gruppierungen in der Kette, insbesondere lineare Polyacetale, z. B. Polydioxolan. Die Molekulargewichte des Polymeren können gegebenenfalls durch die bei der Formaldehyd- oder Trioxanpolymerisation üblichen Regler auf die angestrebten Werte eingestellt werden. Als Regler kommen Acetale bzw. Formale einwertiger Alkohole, die Alkohole selbst sowie die als Kettenüberträger fungierenden geringen Mengen Wasser, deren Anwesenheit sich in der Regel nie vollständig vermeiden läßt, in Frage. Die Regler werden in Mengen von 10 bis 10 000 ppm, vorzugsweise von 100 bis 1 000 ppm, eingesetzt.

Als Initiatoren werden die bei der Formaldehyd- oder Trioxanpolymerisation üblichen Starter oder ionisierende Strahlen verwendet. Es eignen sich Protonensäuren, wie fluorierte oder chlorierte Alkyl- und Arylsulfonsäuren, z. B. Trifluormethansulfonsäure oder Lewis-Säuren, wie z. B. Zinntetrachlorid, Arsenpentafluorid, Phosphorsäurepentafluorid und Bortrifluorid sowie deren Komplexverbindungen und salzartige Verbindungen, z. B. Bortrifluorid-Etherate und Triphenylmethylenhexafluorophosphat. Es versteht sich von selbst, daß nur solche Initiatoren verwendbar sind, die unter den Polymerisationsbedingungen ausreichend stabil sind. Die Katalysatoren werden in Mengen von etwa 0,01 bis 1 000 ppm, vorzugsweise 0,05 bis 10 ppm, eingesetzt. Im allgemeinen empfiehlt es sich, den Katalysator in verdünnter Form zuzusetzen, vorzugsweise in Konzentrationen von 0,005 bis 5 Gew. %. Als Lösungsmittel hierfür können inerte Verbindungen, wie aliphatische, cycloaliphatische Kohlenwasserstoffe, halogenierte aliphatische Kohlenwasserstoffe, Glykolether usw. verwendet werden.

Monomere, Initiatoren und gegebenenfalls Regler können auf beliebige Weise vorgemischt oder auch getrennt voneinander dem Polymerisationsreaktor zugegeben werden. Zweckmäßigerweise wird Formaldehyd mit einer Reinheit von über 99,9 % dem Reaktor in verdichteter Form unter einem Druck von 5 bis 50 bar, bevorzugt 5 bis 25 bar, und mit einer Temperatur von 20 bis 180 °C zusammen mit aus dem Prozeß zurückgeführtem Trioxan von 75 bis 140 °C zugeführt. Die Verdichtung des Formaldehyds kann in Kolbenverdichtern, Turboverdichtern und Flüssigkeitsringverdichtern, die mit Rückführtrioxan betrieben werden, erfolgen. Das Masseverhältnis des rückgeführten Trioxans zu eingesetztem Formaldehyd beträgt 0,1 : 1 bis 2,5 : 1 und bevorzugt 0,3 : 1 bis 1 : 1.

Der Polymerisationsreaktor kann als Extruder, Kneter, Rührkessel oder als Strömungsrohr mit oder ohne statische Mischerelemente ausgebildet sein. Der Polymerisationsreaktor ist temperierbar, wobei ihm auch ein Temperaturprofil aufgeprägt werden kann. Ferner können entlang des Reaktors Comonomerdosierstellen vorgesehen sein. Auch Zusätze zur Modifizierung der Schlagzähigkeit können gezielt zudosiert werden.

Erfindungsgemäß sind Temperatur und Druck in der Polymerisationszone so zu wählen, daß die Reaktionskomponenten in fluider Form vorliegen.

**Beschreibung** (für die Vertragsstaaten : BE, NL)

Oximethylenhomopolymerisat hat einen Schmelzpunkt von etwa 176 °C ; bei Einbau verhältnismäßig großer Mengen Comonomerer kann der Schmelzpunkt bis auf etwa 150 °C sinken, durch nicht umgesetzte, im Polymeren gelöste Monomere kann er noch weiter erniedrigt werden. Die Massetemperatur im Polymerisationsreaktor sollte 300 °C nicht überschreiten, da sich bei derart hohen Temperaturen beschleunigt Oximethylen-Polymere zersetzen. Der besonders bevorzugte Temperaturbereich beträgt 130 bis 200 °C.

Es hat sich gezeigt, daß der Polymerisationsumsatz umso höher liegt, je niedriger die Polymerisationstemperatur ist. Aus diesem Grund wird angestrebt, im homogen fluiden Bereich des Systems Polymer/Monomer bei möglichst niedriger Temperatur zu polymerisieren. Bei einer Polymerisationstemperatur von etwa 130 bis 135 °C fallen aus der homogenen Oxymethylen-polymerisat/Trioxan-Schmelze geringe Mengen feinteiliges Polymerisat aus, wenn ein Polymerisationsumsatz von etwa 65 % erreicht ist. Die dann vorliegende noch fluide Suspension von festem Polymer in Polymer/Monomer-Schmelze ist noch gut förderbar, wenn sie nicht mehr als 10, vorzugsweise nicht mehr als 5 Gew. % feste Anteile enthält, so daß die Vorteile der Erfindung noch gewahrt bleiben. Bei Durchführung der Polymerisation in Schneckenreaktoren führt der durch Viskositätsanstieg infolge Suspensionsbildung bedingte, erhöhte Anfall von Dissipationsenergie zu einem Temperaturanstieg. Dies hat zur Folge, daß das ausgefallene Polymerisat — zumindest teilweise — wieder aufschmilzt, und sich so eine quasi selbsttätige Einstellung des Systems im homogen/heterogen fluiden Grenzbereich ergibt. Dies gilt insbesondere in einem Temperaturbereich, bei der die Reaktormanteltemperaturen um bis zu ca. 30 °C unter der bevorzugten unteren Grenze von 135 °C für die Massetemperatur liegen.

Die Massetemperatur der Monomer/Polymer-Mischung läßt sich nur sehr schwer exakt messen ; einen Anhaltspunkt liefert die Außentemperatur des Polymerisationsreaktors. Wesentlich ist, daß das Polymerisat in fluider, vorzugsweise in homogener, geschmolzener Form anfällt. Es hat sich überraschenderweise gezeigt, daß entgegen Angaben in der Literatur sowohl oberhalb der « Ceiling »-Temperatur des Formaldehyds von 119 °C (Brown, N., J. Macrom. Sc. (Chem.) A 1(2) 209-230 (1967)), als auch oberhalb der « Ceiling »-Temperatur des Trioxans von 127 °C (Angew. Chemie 79, 1967, Seite 512 sowie DE-B-1 161 421, Spalte 1, Zeilen 6 bis 22) bei der Polymerisation von Formaldehyd wie auch von Trioxan ein hochmolekulares Polymer entsteht. Die Polymerisation läuft über ein Gleichgewicht, wobei aus dem eingesetzten Formaldehyd und Comonomeren cyclische (vorwiegend Trioxan und Tetroxan) und lineare Oligomere und Acetale des Formaldehyds entstehen, die mit dem gebildeten Polymer und dem (teilweise) gelösten Formaldehyd eine homogene Phase bilden.

Oximethylenpolymere, die bei herkömmlichen kationischen Polymerisations-Verfahren in fester Form anfallen, weisen eine bimodale Molekulargewichtsverteilung auf. Im Gegensatz dazu zeigen Oximethylenpolymere, die bei dem erfindungsgemäßen Polymerisationsverfahren in fluider Form anfallen, eine unimodale Molekulargewichtsverteilung. Das Molekulargewicht der erfindungsgemäß hergestellten Oximethylenpolymeren liegt vorzugsweise oberhalb von 10 000, insbesondere oberhalb von 20 000.

Der Druck im Polymerisationsreaktor liegt vorzugsweise zwischen 2 und 500 bar (200,6 kPa-50,6 MPa), insbesondere zwischen 5 bis 50 bar (506,5 kPa-5,06 MPa). Die Verweilzeit der Polymerisationsmischung in der Polymerisationszone beträgt vorzugsweise 0,1 bis 20 min, insbesondere 0,4 bis 5 min. Die Polymerisation wird vorzugsweise bis zu einem Umsatz von mindestens 30 %, insbesondere mehr als 60 % geführt.

Gemäß einer bevorzugten Ausführungsform werden die alkoholischen Endgruppen in flüssiger Phase direkt mit Epoxiden, Säureanhydriden oder Acetalen, gegebenenfalls nach Desaktivierung des Polymerisationskatalysators und Zusatz eines Katalysators für die Verkappungsreaktion, ohne Mitverwendung von Lösungsmitteln zu thermisch stabilen Ether- oder Estergruppen umgesetzt.

Vorzugsweise wird direkt anschließend an die Polymerisation die Polymerisationsmischung in homogener Schmelze desaktiviert, entgast und konfektioniert. Das hat den großen Vorteil, daß das Polymerisat zum Konfektionieren nicht mehr aufgeschmolzen werden muß, so daß das Verfahren energiesparend durchgeführt werden kann.

Die Desaktivierung der Katalysatorreste erfolgt durch Zugabe von Desaktivatoren zur Polymerisationsschmelze. Geeignete Desaktivatoren sind Ammoniak, aliphatische und aromatische Amine, Alkohole, basisch reagierende Salze, wie Soda und Borax, ferner auch Wasser. Sie werden den Polymeren in Mengen von vorzugsweise bis zu 1 Gew. % zugesetzt.

Der Desaktivierungsreaktor ist gegenüber dem Polymerisationsreaktor räumlich so abgetrennt, daß die Polymer/Monomer-Schmelze ungehindert übertreten kann, das Eindringen der Desaktivatoren in den Polymerisationsreaktor aber sicher vermieden wird. Die Abtrennung erfolgt durch eingebaute Engpässe, die die Strömungsgeschwindigkeit der Schmelze lokal erhöhen, im Falle der Verwendung von Extrudern z. B. durch Stauelemente. Der Desaktivierungsreaktor ist so ausgebildet, daß die Polymer/Monomer-Schmelze in kurzer Zeit intensiv durchmischt wird. Dies wird bei Extrudern durch Einbau besonderer Knetelemente oder Rückmischelemente erreicht. Die Temperatur im Desaktivierungsreaktor liegt vorzugsweise bei 150 bis 300 °C. Es ist möglich, der Schmelze bereits im Desaktivierungsreaktor, bevorzugt zusammen mit dem Desaktivatoren, Stabilisatoren zuzusetzen.

In dem anschließenden Vorentgasungsreaktor findet die Abtrennung der nicht umgesetzten Monomeren vom Polymeren statt. Dies erfolgt durch Druckabsenkung unter gleichzeitiger Schaffung einer möglichst großen Oberfläche der Polymer-Monomer-Schmelze. Geeignete Vorrichtungen für die Vorentgasung sind Röhrenbündelverdampfer, Ringscheibenreaktoren, Flashverdampfer, Dünnschichtverdampfer und Entgasungsextruder. Die abgezogenen Monomer-Dämpfe werden kondensiert und gegebenenfalls nach destillativer Reinigung im Kreislauf erneut der Polymerisation zugeführt. In folgendem Konfektionierreaktor wird die Rohpolymerschmelze nachentgast und es werden auch die üblichen Zusatzstoffe eingemischt, z. B. Licht- und Wärme-Stabilisatoren, Antioxidantien, Nucleierungsmittel, Farbstoffe, Pigmente, Gleitmittel und Füll- und Verstärkungsmittel, z. B. Glasfasern. Das fertige Oximethylen-Polymere kann beim Austreten aus dem Konfektionierreaktor granuliert werden. Es zeigt gegenüber herkömmlich hergestellten Polymerisaten bessere mechanische Eigenschaften, z. B. bessere Zähigkeit und Steifigkeit sowie eine größere Homogenität, was sich in Stippenfreiheit äußert. Es ist für die üblichen Einsatzzwecke geeignet.

Die im Beispiel genannten Teile und Prozente beziehen sich auf das Gewicht. Die benutzte Stoffbezeichnung « Trioxan » ist als Synonym für Trioxan und andere cyclische und lineare Oligomere und Acetale des Formaldehyds und gelösten Formaldehyd anzusehen, die in der Lage sind bei ihrer Polymerisation Polyoximethylene zu bilden. Diese Stoffe fallen im Polymerisationsgleichgewicht unter den vorgehend genannten Bedingungen an, ihre Abtrennung ist vor der Rückführung nicht notwendig.

Beispiel

Formaldehyd mit einer Reinheit von über 99,9 % wird dem Reaktor mit einer Temperatur von 140 °C und einem Druck von 25 bar (2,53 MPa) zugeführt. Rücklauftrioxan aus dem Prozeß mit einer Temperatur von 130 °C wird mit 2,5 % Butandiolformal und 0,02 % Methylal, bezogen auf dem Gesamtreaktorzulauf, vermischt und nach Zumischung von 0,35 ppm Trifluormethansäure (als 0,005 %ige Lösung in Diethylenglykoldimethylether) dem Reaktor zugepumpt. Das Verhältnis zwischen dem Rücklauftrioxan- und Formaldehydstrom beträgt 0,6 : 1. Der Reaktor vom Typ ZDS-W-83 (Fa. Werner und Pfleiderer) ist als Doppelschneckenextruder mit besonderen Vorrichtungen zur Wärmeabfuhr ausgestattet. Das L : D-Verhältnis beträgt ca. 30. Der Reaktor wird bei 120 °C Manteltemperatur betrieben.

Der Druck im Reaktor beträgt ca. 19 bar (1,92 MPa). Die Temperatur der Reaktionsmischung steigt auf ca. 170 °C. Nach einer Verweilzeit von ca. 2,3 min tritt die Reaktionsmischung in den im selben Extruder durch Stauelemente abgetrennten Desaktivierungsreaktor ein, in dem der Katalysator durch Zusatz von 50 ppm Natriumcarbonat, eingebracht durch einen Polyoximethylenschmelzebatch, desaktiviert wird. Die Temperatur im Desaktivierungsreaktor beträgt ca. 175 °C, die Verweilzeit ca. 0,4 min. Dann tritt die Schmelze in den Vorentgasungsreaktor ein, der ebenfalls durch Stauelemente abgetrennt ist. Bei einem Druck von 2 bar (202,6 KPa) und einer Temperatur von ca. 250 °C wird der größte Teil der nicht umgesetzten Monomeren bis auf einen Gehalt von ca. 1,5 % flüchtige Anteile entfernt. Das vorentgaste Polymer durchläuft einen zusätzlichen Nachentgasungs- und Konfektionierungsreaktor, in dem bei ca. 250 °C und ca. 0,2 bar (20,3 KPa) ein Abbau thermisch instabiler Endgruppen und die Einarbeitung von Wärme- und Lichtstabilisatoren sowie Nucleierungsmittel erfolgen. Das fertige Polymerisat wird granuliert.

Der Umsatz, bezogen auf eingesetzten Formaldehyd und rückgeführtes Restmonomer beträgt 61 %. Das Granulat weist einen Schmelzindex (190 °C ; 2,16 kg) von 8,2 g/10 min auf. Die thermische Stabilität in Stickstoff (2 h, 220 °C) beträgt 99,2 %.

Die im Vorentgasungsschritt abgezogenen Restmonomeren werden in einer Direktkondensation durch Kreislauftrioxan von 75 °C zu 96,5 % kondensiert und als Rückführtrioxan dem Polymerisationsreaktor zugeführt. Die nicht kondensierbaren Anteile werden aus dem Kopf der Kondensationszone abgezogen und in einer koventionellen Wasserwäsche absorbiert.

**0 108 324**

**Patentansprüche** (für die Vertragsstaaten : DE, FR, GB, IT, NL)

1. Kontinuierliches Verfahren zur Herstellung von Oximethylenpolymeren durch Homo- oder Copolymerisation von Formaldehyd mit 9,1 bis 71 Gew.-%, bezogen auf die Gesamtmenge an rückgeführten Monomeren und Formaldehyd, rückgeführten Restmonomeren, mit Hilfe üblicher Initiatoren, gegebenenfalls in Gegenwart von Reglern, dadurch gekennzeichnet, daß während der Polymerisation alle Reaktionskomponenten in gasförmiger, geschmolzener oder gelöster Form vorliegen.

2. Kontinuierliches Verfahren zur Herstellung von Oximethylencopolymeren nach Anspruch 1, dadurch gekennzeichnet, daß im Anschluß an die Polymerisation das Polymerisat in homogener Schmelze desaktiviert, entgast und konfektioniert wird, ohne daß zwischen den Verfahrensstufen eine Phasenänderung erfolgt.

3. Kontinuierliches Verfahren zur Herstellung von Oximethylenhomopolymeren nach Anspruch 1, dadurch gekennzeichnet, daß die Anschluß an die Polymerisation, gegebenenfalls nach der Desaktivierung der Polymerisationsinitiatoren und Zusatz anderer Katalysatoren, das Polymerisat einer Verkappungsreaktion zur Herstellung thermisch stabiler Ether- oder Estergruppen unterworfen wird, ohne daß zwischen den Verfahrensstufen eine Phasenänderung erfolgt.

**Patentansprüche** (für den Vertragsstaat BE)

1. Kontinuierliches Verfahren zur Herstellung von Oximethylenpolymeren durch Homo- oder Copolymerisation von Formaldehyd mit Hilfe üblicher Initiatoren, gegebenenfalls in Gegenwart von Reglern, dadurch gekennzeichnet, daß während der Polymerisation alle Reaktionskomponenten in gasförmiger, geschmolzener oder gelöster Form vorliegen.

2. Verfahren nach Anspruch 1, dadurch gekennzeichnet, daß der Monomerzulauf zum Reaktor aus einem Gemisch von Formaldehyd und aus dem Prozeß rückgeführten Restmonomeren, im wesentlichen Trioxan, besteht und der Anteil des rückgeführten Monomeren zwischen 9 und 71 %, bezogen auf die Gesamtmenge an rückgeführtem Monomeren und Formaldehyd beträgt.

3. Kontinuierliches Verfahren zur Herstellung von Oximethylencopolymeren nach Anspruch 1, dadurch gekennzeichnet, daß im Anschluß an die Polymerisation das Polymerisat im homogener Schmelze desaktiviert, entgast und konfektioniert wird, ohne daß zwischen den Verfahrensstufen eine Phasenänderung erfolgt.

4. Kontinuierliches Verfahren zur Herstellung von Oximethylenhomopolymeren nach Anspruch 1, dadurch gekennzeichnet, daß im Anschluß an die Polymerisation, gegebenenfalls nach der Desaktivierung der Polymerisationsinitiatoren und Zusatz anderer Katalysatoren, das Polymerisat einer Verkappungsreaktion zur Herstellung thermisch stabiler Ether- oder Estergruppen unterworfen wird, ohne daß zwischen den Verfahrensstufen eine Phasenänderung erfolgt.

**Claims** (for the Contracting States : DE, FR, GB, IT, NL)

1. A continuous process for the production of oxymethylene polymers by homopolymerization or copolymerization of formaldehyde with from 9.1 to 71 % by weight, based on the total weight of recycled monomers and formaldehyde, of recycled residual monomers, with the aid of conventional initiators, in the presence or absence of regulators, wherein, during the polymerization, all reaction components are present in gaseous, molten or dissolved form.

2. A continuous process for the production of oxymethylene copolymers as claimed in claim 1, wherein, following the polymerization, the polymer is deactivated, degassed and compounded in the form of a homogeneous melt, without a change in phase occurring between the procedural steps.

3. A continuous process for the production of oxymethylene homopolymers as claimed in claim 1, wherein, following the polymerization and after the optional deactivation of the polymerization initiators and the optional addition of other catalysts, the polymer is subjected to a masking reaction to form thermostable ether or ester groups, without a change in phase occurring between the procedural steps.

**Claims** (for the Contracting State BE)

1. A continuous process for the production of oxymethylene polymers by homopolymerization or copolymerization of formaldehyde with the aid of conventional initiators, in the presence or absence of regulators, wherein, during the polymerization, all reaction components are present in gaseous, molten or dissolved form.

2. A process as claimed in claim 1, wherein the monomer feed to the reactor consists of a mixture of formaldehyde and residual monomers, mainly trioxane, recycled from the process, and the amount of recycled monomers is between 9 and 71 %, based on the total weight of recycled monomers and formaldehyde.

**0 108 324**

3. A continuous process for the production of oxymethylene copolymers as claimed in claim 1, wherein, following the polymerization, the polymer is deactivated, degassed and compounded in the form of a homogeneous melt, without a change in phase occuring between the procedural steps.

4. A continous process for the production of oxymethylene homopolymers as claimed in claim 1, wherein, following the polymerization and after the optional deactivation of the polymerization initiators and the optional addition of other catalysts, the polymer is subjected to a masking reaction to form thermostable ether or ester groups, without a change in phase occurring between the procedural steps.

**Revendications** (pour les Etats contractants : FR, DE, GB, IT, NL)

1. Procédé en continu pour la préparation de polymères oxy-méthyléniques par une homo- ou une copolymérisation de l'aldéhyde formique avec recyclage de 9,1 à 71 % du poids total d'aldéhyde formique et de monomères recyclés de monomères résiduels à l'aide d'amorceurs classiques, éventuellement en présence de régulateurs, caractérisé en ce que, durant la polymérisation, tous les partenaires de la réaction se trouvent à l'état gazeux, fondus ou dissous.

2. Procédé en continu suivant la revendication 1 pour la préparation de copolymères oxy-méthyléniques, caractérisé en ce que, après la polymérisation, le polymérisat formé est désactivé à l'état de produit fondu homogène, dégazé et façonné sans modification de phase(s) entre les divers stades opératoires.

3. Procédé en continu suivant la revendication 1 pour la préparation d'homopolymères oxyméthyléniques, caractérisé en ce que, après la polymérisation et éventuellement après la désactivation des amorceurs de la polymérisation et l'addition d'autres catalyseurs, le polymérisat formé est soumis à une réaction de blocage en vue de la formation de groupes éther ou ester thermostables, sans qu'il y ait une modification de phase(s) entre les divers stades opératoires.

**Revendications** (pour l'Etat contractant BE)

1. Procédé en continu pour la préparation de polymères oxy-méthyléniques par une homo- ou une copolymérisation de l'aldéhyde formique à l'aide d'amorceurs classiques, éventuellement en présence de régulateurs, caractérisé en ce que, durant la polymérisation, tous les partenaires de la réaction se trouvent à l'état gazeux, fondus ou dissous.

2. Procédé suivant la revendication 1, caractérisé en ce que les produits monomères introduits dans le réacteur sont constitués d'un mélange d'aldéhyde formique et de monomères résiduels recyclés, essentiellement du trioxanne, la proportion du monomère recyclé étant comprise entre 9 et 71 % de la quantité totale de monomère recyclé et d'aldéhyde formique.

3. Procédé en continu suivant la revendication 1 pour la préparation de copolymères oxy-méthyléniques, caractérisé en ce que, après la polymérisation, le polymérisat formé est désactivé à l'état de produit fondu homogène, dégazé et façonné sans modification de phase(s) entre les divers stades opératoires.

4. Procédé en continu suivant la revendication 1 pour la préparation d'homopolymères oxyméthyléniques, caractérisé en ce que, après la polymérisation et éventuellement après la désactivation des amorceurs de la polymérisation et l'addition d'autres catalyseurs, le polymérisat formé est soumis à une réaction de blocage en vue de la formation de groupes éther ou ester thermostables, sans qu'il y ait une modification de phase(s) entre les divers stades opératoires.